# EUROPEAN PATENT APPLICATION

(11) **EP 4 542 936 A1**
(43) Date of publication of application: **23.04.2025**
(21) Application number: 24206090.3
(22) Date of filing: 11.10.2024
(51) Int. Cl.: H04L 12/40

(54) **COMMUNICATIONS REDUNDANCY BETWEEN NETWORK NODES**

(30) Priority: 17.10.2023 JP 2023179024
(71) Applicant: Yokogawa Electric Corporation, Tokyo 180-8750 (JP)
(72) Inventor: TOINAGA, Takeshi, Musashino-shi, Tokyo, 180-8750 (JP); SATO, Atsushi, Musashino-shi, Tokyo, 180-8750 (JP); YOSHIDA, Yoshitaka, Musashino-shi, Tokyo, 180-8750 (JP)
(74) Representative: Winter, Brandl - Partnerschaft mbB

(57) **Abstract**

A communication control device 51 according to an embodiment includes a first wired communication unit (511), a second wired communication unit (512), a wireless communication unit (513), a identifying unit (5151), and a communication control unit (5152). The first wired communication unit (511) has a wired communication function. The second wired communication unit (512) has a wired communication function, and is connected to the IO node 21. The wireless communication unit (513) has a wireless communication function. The identifying unit (5151) is connected to the first wired communication unit (511) via a wired network to identify another communication control device that satisfies a condition. The communication control unit (5152) establishes communication with another communication control device via a wireless network.

## Description

### FIELD

The present invention relates to a communication control device, a communication control method, a communication control program, and a communication control system.

### BACKGROUND

As a conventionally known method for making a communication network having a plurality of nodes redundant, each of the nodes is connected to a plurality of paths in a wired manner (see, for example, JP 2014-112977 A).

However, the conventional technique has a problem that redundancy in a communication network cannot be easily realized.

For example, in the conventional technique, each node needs to have physical communication ports as many as the number of paths connected thereto. On the other hand, it may be difficult to provide a plurality of communication ports, for example, because the size of the node has been reduced.

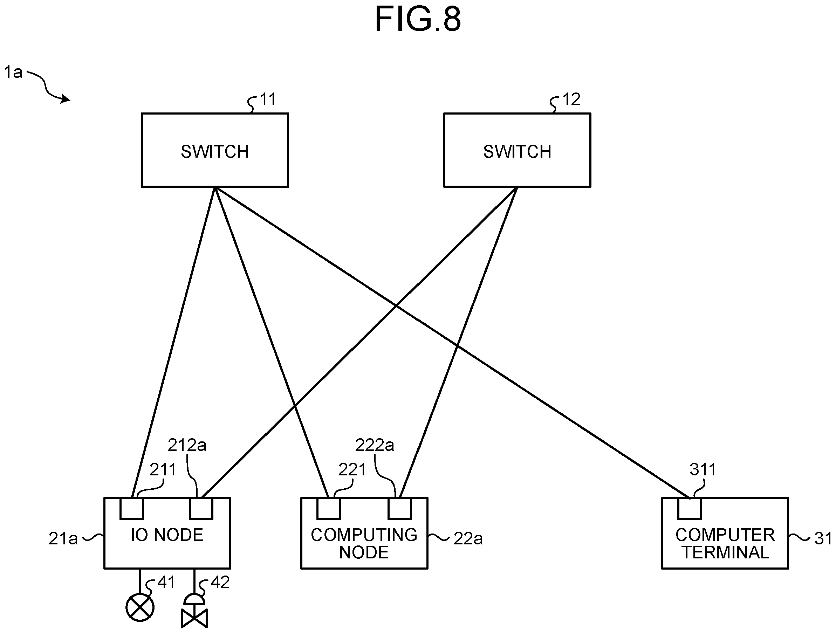

A conventional communication control system will be described with reference to FIG. 8. FIG. 8 is a diagram illustrating a conventional communication control system.

As illustrated in FIG. 8, a communication control system 1a includes a switch 11, an IO node 21a, a computing node 22a, and a computer terminal 31. The IO node 21a is connected to a field device 41 and a field device 42.

Here, the node is a device that performs information processing and communication. The node may be rephrased as a computer or the like.

The IO node 21a includes a wired communication unit 211 and a wired communication unit 212a. The wired communication unit 211 is connected to the switch 11, and the wired communication unit 212a is connected to a switch 12. The computing node 22a includes a wired communication unit 221 and a wired communication unit 222a. The wired communication unit 221 is connected to the switch 11, and the wired communication unit 222a is connected to the switch 12. The computer terminal 31 includes a wired communication unit 311. The wired communication unit 311 is connected to the switch 11.

As described above, the communication control system 1a has a redundant network configuration between the IO node 21a and the computing node 22a by a star (or mesh) topology. However, as described above, in a case where a plurality of communication ports cannot be provided in a node, the network configuration as illustrated in FIG. 8 cannot be realized.

In one aspect, an object is to easily realize redundancy in a communication network.

### SUMMARY

According to an aspect of an embodiment, a communication control device includes: a first wired communication unit (511) having a wired connection function; a second wired communication unit (512) having a wired connection function and connected to a node; a wireless communication unit (513) having a wireless communication function; a identifying unit (5151) connected to the first wired communication unit (511) via a wired network to identify another communication control device that satisfies a condition; and a communication control unit (5152) that establishes communication with the another communication control device via a wireless network.

According to an aspect of an embodiment, a communication control method executed by a communication control device includes a first wired communication unit (511) having a wired communication function, a second wired communication unit (512) having a wired communication function and connected to a node, and a wireless communication unit (513) having a wireless communication function, the communication control method includes: a identifying step of identifying another communication control device that is connected to the first wired communication unit (511) via a wired network and satisfies a condition; and a communication control step of establishing communication with the another communication control device via a wireless network.

According to an aspect of an embodiment, a communication control program for causing a communication control device including a first wired communication unit (511) having a wired communication function, a second wired communication unit (512) having a wired communication function and connected to a node, and a wireless communication unit (513) having a wireless communication function to execute: identifying another communication control device that is connected to the first wired communication unit (511) via a wired network and satisfies a condition; and establishing communication with the another communication control device via a wireless network.

According to an aspect of an embodiment, a communication control system includes a first node, a first communication control device, a second node, and a second communication control device, wherein the first communication control device includes: a first wired communication unit (511) having a wired communication function; a second wired communication unit (512) having a wired communication function and connected to the first node; a first wireless communication unit (513) having a wireless communication function; and a first communication control unit (5152) that establishes communication with the second communication control device via a wireless network when the first wired communication unit (511) is connected to the second communication control device via a wired network, and transmits a frame transmitted from the first node to the second node to the second communication control device via both the wired network and the wireless network, and the second communication control device includes: a third wired communication unit (521) having a wired communication function; a fourth wired communication unit (522) having a wired communication function and connected to the second node; a second wireless communication unit (513) having a wireless communication function; and a second communication control unit (5152) that establishes communication with the first communication control device via the wireless network when the third wired communication unit (521) is connected to the first communication control device via the wired network, and transmits a frame transmitted from the second node to the first node to the first communication control device via both the wired network and the wireless network.

### BRIEF DESCRIPTION OF THE DRAWINGS

FIG. 1 is a diagram illustrating a configuration example of a communication control system according to a first embodiment;
FIG. 2 is a diagram illustrating a configuration example of a communication control system according to the first embodiment;
FIG. 3 is a diagram illustrating a configuration example of a communication control system according to the first embodiment;
FIG. 4 is a diagram illustrating a configuration example of a communication control device according to the first embodiment;
FIG. 5 is a flowchart illustrating a flow of a process performed by the communication control device;
FIG. 6 is a flowchart illustrating a flow of a process performed by the communication control device;
FIG. 7 is a diagram for explaining a hardware configuration example; and
FIG. 8 is a diagram illustrating a conventional communication control system.

### DESCRIPTION OF EMBODIMENTS

Hereinafter, a communication control device, a communication control method, a communication control program, and a communication control system according to embodiments disclosed in the present application will be described in detail with reference to the drawings. Note that the invention of the present application is not limited by the embodiments described herein. In addition, the same elements are denoted by the same reference numerals, and redundant description will be omitted as appropriate. In addition, the embodiments can be appropriately combined within a range that does not cause any contradiction.

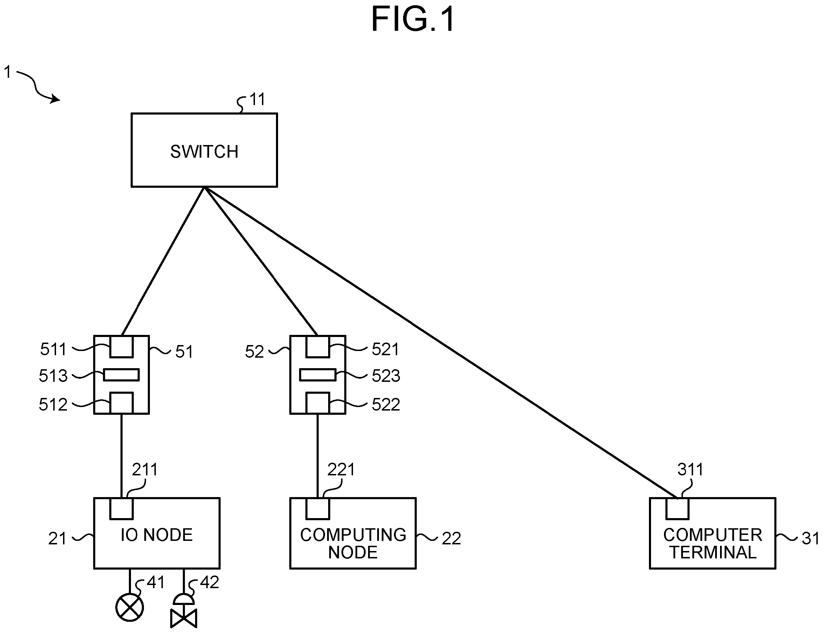

A configuration of a communication control system according to a first embodiment will be described with reference to FIG. 1. FIG. 1 is a diagram illustrating a configuration example of a communication control system according to the first embodiment.

As illustrated in FIG. 1, the communication control system 1 includes a switch 11, an IO node 21, a computing node 22, a computer terminal 31, a communication control device 51, and a communication control device 52. The IO node 21 is connected to a field device 41 and a field device 42.

Here, the node is a device that performs information processing and communication. The node may be rephrased as a computer or the like. In addition, the field device transmits a sensor value detected by a sensor or a frame indicating a detection result based on the sensor value to the node by a predetermined communication protocol.

For example, the field device 41 and the field device 42 are provided in a plant. The plant is, for example, an oil plant, a petrochemical plant, a chemical plant, or a gas plant. By operating the plant, products such as liquefied natural gas (LNG), resin (plastic, nylon, etc.), and chemical products are obtained.

In addition, the plant includes a factory facility, a machine facility, a production facility, a power generation facility, a storage facility, a wellhead facility for mining oil, natural gas, and the like. In addition, the plant also includes equipment for producing products.

The field device 41 acquires information regarding a state of the plant. For example, the field device 41 is a temperature sensor, a pH sensor, a speed sensor, an acceleration sensor, an atmospheric pressure sensor, a gas concentration sensor, a device that detects an opened degree of a valve, a device that detects a state (a turn-on or turn-off state) of a switch, or the like. The field device 42 is an actuator that drives a valve or the like.

In addition, the IO node 21 transmits the frame acquired from the field device 41 to the computing node 22. The computing node 22 performs arithmetic processing. In addition, the computing node 22 transmits an arithmetic processing result (a control signal or the like) to the field device 41, the field device 42, and the like via the IO node 21.

Note that the configurations and operations of the nodes included in the communication control system 1 are not limited to those described herein. The nodes included in the communication control system 1 may communicate data with each other.

The IO node 21 includes a wired communication unit 211. The wired communication unit 211 is connected to the communication control device 51. The computing node 22 includes a wired communication unit 221. The wired communication unit 221 is connected to the communication control device 52. The computer terminal 31 includes a wired communication unit 311. The wired communication unit 311 is connected to the switch 11.

In this manner, each of the IO node 21 and the computing node 22 includes one wired communication unit. Furthermore, each wired communication unit may include, for example, an Ethernet (registered trademark) port to which a local area network (LAN) cable is connected.

Here, the computer terminal 31 is a device such as a personal computer (PC) for managing the switch 11. Here, the computer terminal 31 is a device such as a human machine interface (HMI) that monitors operations of various nodes or a personal computer (PC) for managing a network or the like. Although the computer terminal 31 in FIG. 1 includes only one wired communication unit, a wired communication unit can be easily added as necessary.

Meanwhile, since the node is installed in a narrow place or in a place with a limited available space, there are restrictions such as size reduction, weight reduction, and simple configuration. For this reason, it is preferable that the number of communication ports of the node is small.

The communication control device 51 and the communication control device 52 according to the present embodiment easily realize a redundant network configuration between the nodes at least between the communication control device 51 and the communication control device 52, even in a case where one communication port is provided in each of the nodes.

The communication control device 51 includes a first wired communication unit 511, a second wired communication unit 512, and a wireless communication unit 513. The first wired communication unit 511 is connected to the switch 11. The second wired communication unit 512 is connected to the wired communication unit 211 of the IO node 21.

In addition, the communication control device 52 includes a third wired communication unit 521, a fourth wired communication unit 522, and a wireless communication unit 523. The third wired communication unit 521 is connected to the switch 11. The fourth wired communication unit 522 is connected to the wired communication unit 221 of the computing node 22.

Each wired communication unit is, for example, a wired communication module. The wired communication module is a module having a communication function corresponding to a predetermined wired communication protocol, such as an Ethernet module, a fiber channel module, or a USB module. The wireless communication unit is a wireless communication module. The wireless communication module is a module having a communication function corresponding to a predetermined wireless communication protocol, such as a Wi-Fi (registered trademark) module, a Bluetooth (registered trademark) module, or a low power wide area (LPWA) module.

The node and a communication control unit may be connected to each other by a universal serial bus (USB) instead of the Ethernet. In this case, the wired communication unit 211, the second wired communication unit 512, the wired communication unit 221, and the fourth wired communication unit 522 have USB ports. Furthermore, the communication control device 51 can be supplied with power from the IO node 21 via the USB port.

The operations of the communication control device 51 and the communication control device 52 will be described. Note that, since the communication control device 51 and the communication control device 52 have the same function, the communication control device 51 and the communication control device 52 may be appropriately replaced in the following description.

First, as illustrated in FIG. 1, the communication control device 51 is connected to the switch 11 and the IO node 21 via wired networks. Furthermore, the communication control device 52 is connected to the computing node 22 via a wired network. The communication control device 51 and the communication control device 52 are connected to a wired network including the switch 11. Note that a communication control device other than the communication control device 51 and the communication control device 52, another node, and another computer terminal may be further connected to wired networks.

In a case where the first wired communication unit 511 is connected to a wired network, the communication control device 51 identifies another communication control device that is connected to the wired network and satisfies the condition. For example, the communication control device 51 identifies another communication control device identified by predetermined identification information. Note that it is assumed that the communication control device 52 satisfies the condition. In addition, the communication control device 51 finding a communication control device by identification may be rephrased as identifying a communication device.

The identification information is, for example, a MAC address. For example, the communication control device 51 stores the MAC address. Then, the communication control device 51 identifies the communication control device 52 having the stored MAC address.

Furthermore, it is assumed that the communication control device 52 identifies the communication control device 51 as another communication control device that satisfies the condition using a method similar to that used by the communication control device 51. At this time, the communication control device 51 and the communication control device 52 can identify each other as communication control devices that satisfy the condition, establishing communication via the wireless network between the wireless communication unit 513 and the wireless communication unit 523.

For example, the communication control device 51 establishes communication with the communication control device 52 by performing Bluetooth pairing. Furthermore, for example, the communication control device 51 establishes communication with the communication control device 52 by using itself as an access point of WiFi or by peer-to-peer connection.

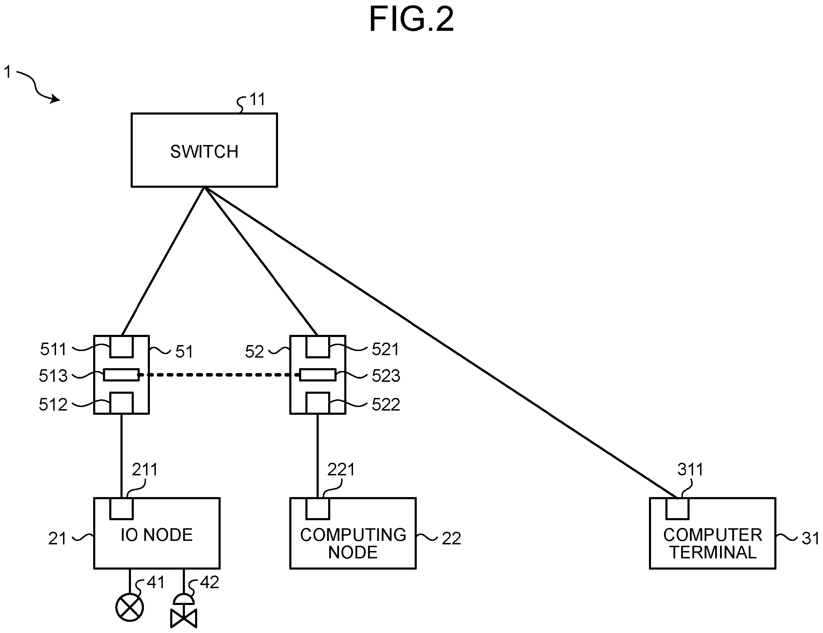

As a result, as illustrated in FIG. 2, the communication control device 51 and the communication control device 52 are connected to each other by both a wired network (a solid line in FIG. 2) and a wireless network (a dotted line in FIG. 2). That is, a redundant network configuration is easily realized at least between the communication control device 51 and the communication control device 52.

In addition, the communication control device 52 transmits a frame transmitted by the computing node 22 with the IO node 21 as a destination through both a path via the wired network and a path via the wireless network. Then, when the same frame is received from the communication control device 51 via both the wired network and the wireless network, the communication control device 52 transfers the frame that has been received earlier to the IO node 21, and discards the frame that has been received later. As a result, even if any frame does not arrive correctly, a time-consuming process such as resending the frame or switching from an abnormal network to a normal network is not necessary.

The transfer and discard of the frame by the communication control system 1 may be realized using a method such as IEEE 802.1CB (frame replication and elimination for reliability).

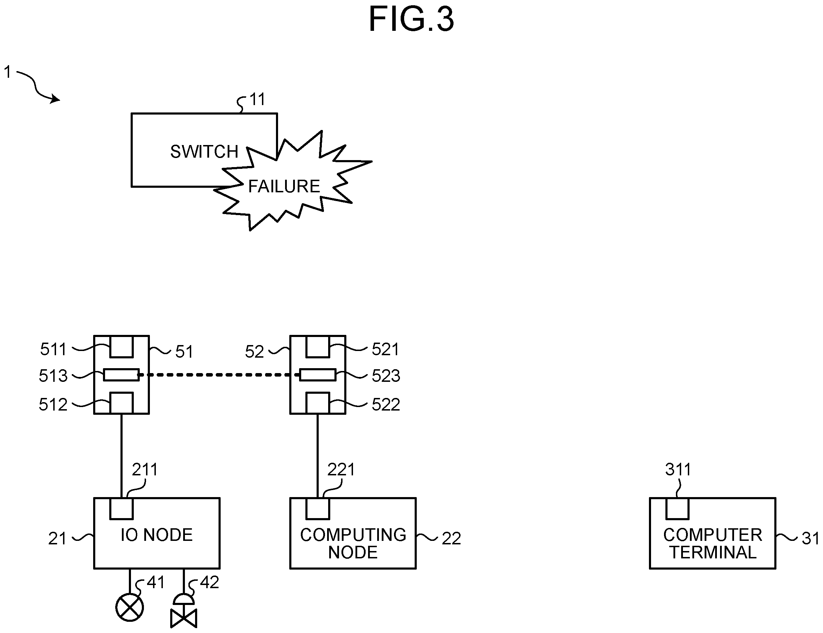

Furthermore, as illustrated in FIG. 3, a case where the switch 11 becomes unusable due to a failure will be considered. In this case, the communication control device 51 cannot communicate with the communication control device 52 using the wired network. On the other hand, if communication is established via the wireless network, the communication control device 51 can continue to communicate with the communication control device 52 using the wireless network. The communication control system 1 can take advantage of such redundancy. For example, if the switch 11 fails, the computer terminal 31 is disconnected from the network. Even in such a case, wireless communication between the communication control device 51 and the communication control device 52 can be continuously used.

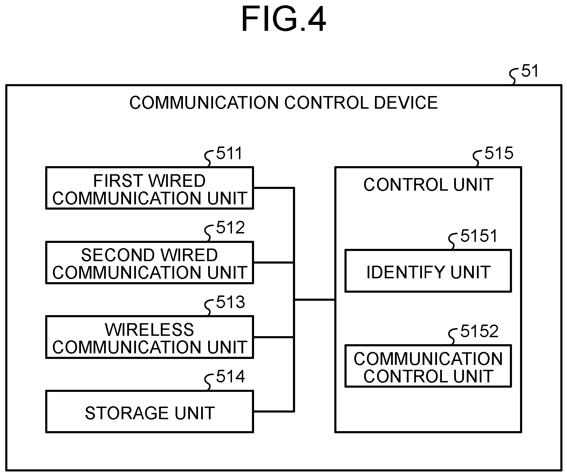

A configuration of the communication control device 51 will be described with reference to FIG. 4. FIG. 4 is a diagram illustrating a configuration example of a communication control device according to the first embodiment. Note that the configuration of the communication control device 52 is the same as the configuration of the communication control device 51.

As illustrated in FIG. 4, the communication control device 51 includes a first wired communication unit 511, a second wired communication unit 512, a wireless communication unit 513, a storage unit 514, and a control unit 515.

The first wired communication unit 511 has a wired communication function. The second wired communication unit 512 has a wired communication function, and is connected to the IO node 21. The wireless communication unit 513 has a wireless communication function.

The storage unit 514 stores various types of data, various programs executed by the control unit 515, and the like. For example, the storage unit 514 is a storage device such as a hard disk drive (HDD), a solid state drive (SSD), or a flash memory. The storage unit 514 stores, as necessary, various types of data generated during processing executed by the communication control device 51, such as data obtained in the process when the control unit 515 executes various types of processing and processing results obtained by executing the various types of processing.

The control unit 515 is a processing unit that controls the entire communication control device 51. The control unit 515 is an arithmetic device such as a central processing unit (CPU) including a processor or a microcomputer. The control unit 515 includes a identifying unit 5151 and a communication control unit 5152.

In a case where the first wired communication unit 511 is connected to a wired network, the identifying unit 5151 identifies another communication control device that is connected to the wired network and satisfies the condition. For example, the identifying unit 5151 identifies another communication control device identified by predetermined identification information.

The communication control unit 5152 establishes communication with another communication control device via a wireless network. In addition, when the same frame is received from another communication control device via both the wired network and the wireless network, the communication control unit 5152 transfers the frame that has been received earlier to the IO node 21, and discards the frame that has been received later.

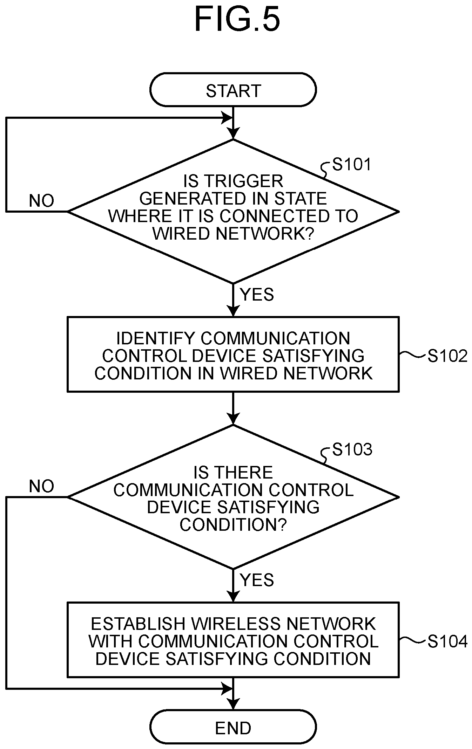

A process in which a communication control device establishes a wireless network will be described with reference to FIG. 5. FIG. 5 is a flowchart illustrating a flow of a process performed by a communication control device.

As illustrated in FIG. 5, first, the communication control device 51 stands by until a trigger is generated (Step S101, No) in a state where it is connected to the wired network (Step S101). The trigger may be a connection to the wired network, a lapse of a certain period of time after the connection to the wired network, or a manual operation.

When the trigger is generated (Step S101, Yes), the communication control device 51 identifies a communication control device that satisfies a condition in the wired network (Step S102).

When there is no communication control device that satisfies the condition (Step S103, No), the communication control device 51 ends the process. Furthermore, the communication control device 51 may reset the trigger and return to the start. On the other hand, when there is a communication control device that satisfies the condition (Step S103, Yes), the communication control device 51 establishes a wireless network with the communication control device that satisfies the condition (Step S104).

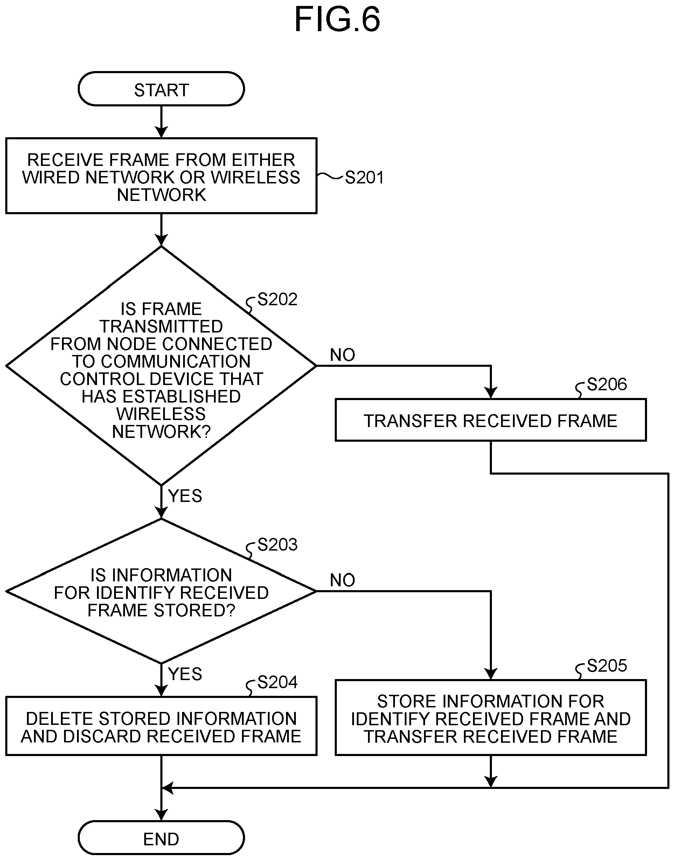

A process in which a communication control device transfers a frame will be described with reference to FIG. 6. FIG. 6 is a flowchart illustrating a flow of a process performed by the communication control device.

As illustrated in FIG. 6, first, the communication control device 51 receives a frame from either a wired network or a wireless network (Step S201).

When the frame is transmitted from the computing node 22 connected to the communication control device 52 that has established the wireless network (Step S202, Yes), the communication control device 51 proceeds to Step S203. Otherwise (Step S202, No), the communication control device 51 transfers the received frame to the IO node 21 (Step S206), and ends the process.

When information for identifying the received frame is stored in the storage unit 514 (Step S203, Yes), the communication control device 51 deletes the stored information and discards the received frame (Step S204). On the other hand, when information for identifying the received frame is not stored in the storage unit 514 (Step S203, No), the communication control device 51 stores the information for identifying the received frame in the storage unit 514, and transfers the received frame to the IO node 21 (Step S205). The information for identifying the frame is, for example, a hash value calculated from the entire frame, a sequence number intentionally inserted into the frame by the communication control device 52, or the like. In a case where the information intentionally inserted into the frame is used, the information for identifying the frame is removed from the frame before the frame is transferred.

The discard of the frame may be not transferring the received frame, not storing the received frame in the memory, or actively deleting the received frame.

As described above, the first wired communication unit 511 has a wired communication function. The second wired communication unit 512 has a wired communication function, and is connected to the IO node 21. The wireless communication unit 513 has a wireless communication function. In a case where the first wired communication unit 511 is connected to a wired network, the identifying unit 5151 identifies another communication control device that is connected to the wired network and satisfies the condition. The communication control unit 5152 establishes communication with another communication control device via a wireless network. As a result, even if one communication port is provided in each node, it is possible to easily realize redundancy in a main path of a communication network.

In addition, the identifying unit 5151 identifies another communication control device identified by predetermined identification information. As a result, the communication control device 51 can reliably identify a communication control device that satisfies the condition.

In addition, when the same frame is received from another communication control device via both the wired network and the wireless network, the communication control unit 5152 transfers the frame that has been received earlier to the IO node 21, and discards the frame that has been received later. As a result, even if any frame does not arrive correctly, the communication control unit 5152 does not need to perform a time-consuming process such as resending the frame or switching from an abnormal network to a normal network, as a result realizing a stable communication operation.

### System

The processing procedure, the control procedure, the specific terms, and the information including various frames and parameters described above or illustrated in the drawings can be arbitrarily changed unless otherwise specified.

In addition, each component of each device illustrated in the drawings is functionally conceptual, and is not necessarily physically configured as illustrated in the drawings. That is, the specific distributed or integrated form of each device is not limited to that illustrated in the drawings. In other words, all or some of the devices can be functionally or physically distributed or integrated in certain units according to various loads, usage conditions, and the like.

Furthermore, all or some of the processing functions performed in each device can be realized by a CPU and a program analyzed and executed by the CPU, or can be realized as hardware by wired logic.

### Hardware

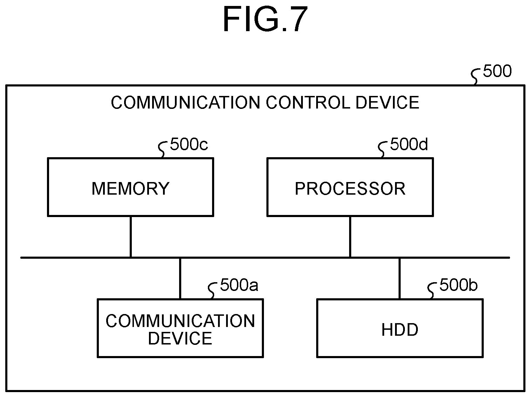

Next, a hardware configuration example of the communication control device 51 will be described. FIG. 7 is a diagram for explaining a hardware configuration example. The communication control device 51 and the communication control device 52 have a hardware configuration similar to that of a communication control device 500 in FIG. 7.

As illustrated in FIG. 7, the communication control device 500 includes a communication device 500a, an HDD 500b, a memory 500c, and a processor 500d. The units illustrated in FIG. 7 are connected to each other by a bus or the like.

The communication device 500a is a network interface card or the like, and communicates with an external device or apparatus. The HDD 500b stores programs and data for operating the functions illustrated in FIG. 4.

The processor 500d reads a program for executing processing similar to that performed by each of the processing units illustrated in FIG. 4 from the HDD 500b or the like and develops the program in the memory 500c, thereby operating the process for executing each of the functions described with reference to FIG. 4, etc. For example, this process executes a function similar to that of each processing unit included in the communication control device 51. Specifically, the processor 500d reads a program having functions similar to those of the identifying unit 5151 and the communication control unit 5152 from the HDD 500b or the like. Then, the processor 500d executes a process of executing processes similar to those of the identifying unit 5151 and the communication control unit 5152.

As described above, the communication control device 51 operates as a communication control device that executes a communication control method by reading and executing a program. Furthermore, the communication control device 51 can also realize functions similar to those in the above-described embodiment by reading the program from a recording medium using a medium reading device and executing the read program. Note that the program referred to in another embodiment is not limited to that executed by the communication control device 51. For example, the present invention can also be similarly applied to a case where another computer or server executes a program or a case where another computer and another server execute a program in cooperation.

This program can be distributed via a network such as the Internet. In addition, this program is recorded on a computer-readable recording medium such as a hard disk, a flexible disk (FD), a CD-ROM, a magneto-optical (MO) disk, or a digital versatile disc (DVD), and can be executed by being read from the recording medium by the computer.

Some examples of combinations of the technical features disclosed herein are described below.

According to an embodiment, redundancy can be easily realized in a communication network.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A communication control device comprising:
a first wired communication unit (511) having a wired connection function;
a second wired communication unit (512) having a wired connection function and connected to a node;
a wireless communication unit (513) having a wireless communication function;
a identifying unit (5151) connected to the first wired communication unit (511) via a wired network to identify another communication control device that satisfies a condition; and
a communication control unit (5152) that establishes communication with the another communication control device via a wireless network.

2. The communication control device according to claim 1, wherein
the identifying unit (5151) identifies another communication control device identified by predetermined identification information.

3. The communication control device according to claim 1, wherein
the identifying unit (5151) identifies another communication control device identified by a predetermined MAC address.

4. The communication control device according to claim 1, wherein
when receiving the same frame from the another communication control device via both the wired network and the wireless network, the communication control unit (5152) transfers a frame received earlier to the node and discards a frame received later.

5. A communication control method executed by a communication control device including
a first wired communication unit (511) having a wired communication function,
a second wired communication unit (512) having a wired communication function and connected to a node, and
a wireless communication unit (513) having a wireless communication function, the communication control method comprising:
a identifying step of identifying another communication control device that is connected to the first wired communication unit (511) via a wired network and satisfies a condition; and
a communication control step of establishing communication with the another communication control device via a wireless network.

6. A communication control program for causing a communication control device including a first wired communication unit (511) having a wired communication function, a second wired communication unit (512) having a wired communication function and connected to a node, and a wireless communication unit (513) having a wireless communication function to execute:
identifying another communication control device that is connected to the first wired communication unit (511) via a wired network and satisfies a condition; and
establishing communication with the another communication control device via a wireless network.

7. A communication control system comprising a first node, a first communication control device, a second node, and a second communication control device, wherein
the first communication control device includes:
a first wired communication unit (511) having a wired communication function;
a second wired communication unit (512) having a wired communication function and connected to the first node;
a first wireless communication unit (513) having a wireless communication function; and
a first communication control unit (5152) that establishes communication with the second communication control device via a wireless network when the first wired communication unit (511) is connected to the second communication control device via a wired network, and transmits a frame transmitted from the first node to the second node to the second communication control device via both the wired network and the wireless network, and
the second communication control device includes:
a third wired communication unit (521) having a wired communication function;
a fourth wired communication unit (522) having a wired communication function and connected to the second node;
a second wireless communication unit (513) having a wireless communication function; and
a second communication control unit (5152) that establishes communication with the first communication control device via the wireless network when the third wired communication unit (521) is connected to the first communication control device via the wired network, and transmits a frame transmitted from the second node to the first node to the first communication control device via both the wired network and the wireless network.

8. The communication control system according to claim 7, wherein
when receiving the same frame from the second communication control device via both the wired network and the wireless network, the first communication control unit (5152) transfers a frame received earlier to the first node and discards a frame received later, and
when receiving the same frame from the first communication control device via both the wired network and the wireless network, the second communication control unit (5152) transfers a frame received earlier to the second node and discards a frame received later.
